(19) Europäisches Patentamt
European Patent Office
Office européen des brevets

(11) **EP 3 910 466 A1**

(12) **EUROPEAN PATENT APPLICATION**

(43) Date of publication:
**17.11.2021  Bulletin 2021/46**

(51) Int Cl.:
*G06F 3/12* (2006.01)　　　　*G06F 3/16* (2006.01)

(21) Application number: **21170066.1**

(22) Date of filing: **23.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2020　JP 2020078716**
**28.09.2020　JP 2020162236**

(71) Applicant: **Ricoh Company, Ltd.**
**Tokyo 143-8555 (JP)**

(72) Inventors:
• **SHIKAMA, Takeshi**
**Tokyo, 143-8555 (JP)**
• **TANAKA, Hiroki**
**Tokyo, 143-8555 (JP)**
• **TOKUMARU, Ko**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **INFORMATION PROCESSING APPARATUS, INFORMATION PROCESSING SYSTEM, METHOD FOR PROCESSING INFORMATION, AND CARRIER MEANS**

(57)　　An information processing apparatus (1) includes a voice input device (415) configured to acquire voice; an identifying unit (152) configured to identify, in a storage area (803), information as a printing target by a printer (2) based on a recognition result of the voice acquired by the voice input device (415); a transmission unit (153) configured to transmit, to the printer (2), a print request of identified information by the identifying unit (152); and a display control unit (154) configured to display a screen presenting the identified information on a display (418) in response to transmission of the print request by the transmission unit (153).

## FIG. 1

EP 3 910 466 A1

**Description**

BACKGROUND

Technical Field

The present disclosure relates to an information processing apparatus, an information processing system, a method for processing information, and carrier means carrying computer readable codes for controlling a computer to carry out the method.

Related Art

In recent years, as laptop personal computers become compact and smart devices have spread, compactness and portability of printers are desired. For example, there are handheld printers from which a paper conveyance mechanism is omitted for enhancing compactness and portability.

Such a handheld printer receives a print request including data of an image to be printed from, for example, a smart device or a personal computer. In the present disclosure, an "image" is an example of information targeted for printing processing (printing target information) on a recording medium, and "print request" include data used to control a recording head or the like for printing the information. A user holds a housing of the handheld printer with hand and operates the printer on a recording medium such as a notebook or paper. As a result, ink is discharged according to the amount of operation (movement of the handheld printer), and the information targeted for printing is printed on the recording medium.

Further, JP-2005-309065-A discloses a speech recognition result output device that enables a user to obtain a print using speech recognition without any manual operation.

However, the speech recognition result output device of JP-2005-309065-A has a drawback that it is difficult for the user to confirm whether or not the printing target information, identified based on a speech recognition result, the information intended by the user to pint.

SUMMARY

In view of the foregoing, an object of the present disclosure is to provide an information processing apparatus, an information processing system, an information processing method, and carrier means, that enable confirmation of information targeted for printing before a printer performs the printing.

Advantageously, there is provided an information processing apparatus that includes a voice input device configured to acquire voice; an identifying unit configured to identify, in a storage area, information as a printing target by a printer based on a recognition result of the voice acquired by the voice input device; a transmission unit configured to transmit, to the printer, a print request of identified information by the identifying unit; and a display control unit configured to display a screen presenting the identified information on a display in response to transmission of the print request by the transmission unit.

Accordingly, there is an effect that the information targeted for printing performed by the printer can be confirmed before printing by the printer.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a diagram illustrating a configuration of a printing system according to a first embodiment of the present disclosure;
FIG. 2 is a block diagram illustrating a configuration of a mobile communication terminal of the printing system illustrated in FIG. 1;
FIG. 3 is a block diagram illustrating a functional configuration of the mobile communication terminal of the printing system illustrated in FIG. 1;
FIG. 4 is a diagram illustrating a list screen of information targeted for printing, stored in a data storage area of the mobile communication terminal of the printing system illustrated in FIG. 1;
FIG. 5 is a diagram illustrating an example of various information stored in a data storage area of the mobile communication terminal illustrated in FIG. 2;

FIG. 6 is a perspective view of a handheld printer of the printing system illustrated in FIG. 1;

FIG. 7 is a block diagram illustrating a configuration of the handheld printer illustrated in FIG. 6;

FIG. 8 is a functional block diagram illustrating a configuration of a controller of the handheld printer illustrated in FIG. 7;

FIG. 9 is a flowchart illustrating a flow of printing operation by the printing system according to the first embodiment;

FIG. 10 is a diagram illustrating a position calculation method of a navigation sensor of the handheld printer illustrated in FIG. 8;

FIG. 11 is a flowchart illustrating a flow of print processing operations by the mobile communication terminal of the printing system, corresponding to voice input, according to the first embodiment;

FIG. 12 is a diagram illustrating an example of a default screen at the start of printing, on the mobile communication terminal illustrated in FIG. 6;

FIG. 13 is a diagram illustrating an example of a voice input screen displayed, at the start of printing, on the mobile communication terminal illustrated in FIG. 6;

FIG. 14 is a diagram illustrating an example of a voice input error screen;

FIG. 15 is a diagram illustrating an example of a transmission dialog screen;

FIG. 16 is a diagram illustrating an example of a preview screen of text data of an address corresponding to voice input;

FIG. 17 is a diagram illustrating an example of a preview screen of a Quick Response (QR) code (registered trademark) of an address corresponding to voice input;

FIG. 18 is a diagram illustrating an example of various types of information stored in a data storage area, according to a second embodiment;

FIG. 19 is a flowchart illustrating a flow of print processing operations by a mobile communication terminal, corresponding to voice input, according to the second embodiment;

FIG. 20 is a flowchart illustrating a flow of operations for identifying information in FIG. 19;

FIG. 21 is a flowchart illustrating a flow of operations for displaying a preview screen;

FIG. 22 is a diagram illustrating an example of a confirmation screen;

FIG. 23 is a diagram illustrating an example of a preview screen;

FIG. 24 is a diagram illustrating an example of a preview screen in which the print order is changed; and

FIG. 25 is a diagram illustrating another example of the preview screen in which the print order is changed.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A printing system according to a first embodiment of the present disclosure is described with reference to the accompanying drawings.

System Configuration

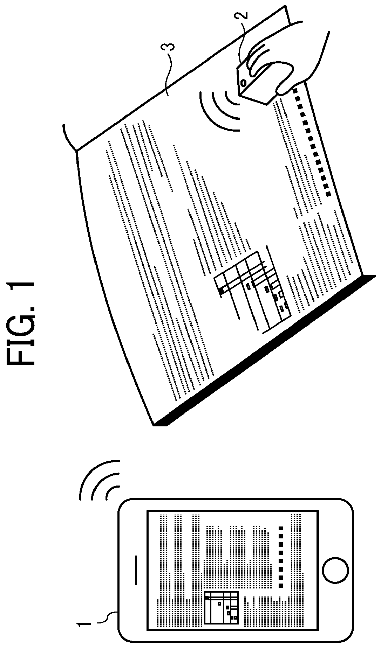

FIG. 1 is a diagram illustrating a configuration of a printing system according to a first embodiment of the present disclosure. As illustrated in FIG. 1, the printing system according to the present embodiment includes a mobile communication terminal 1 (an example of an information processing apparatus) and a handheld printer 2 (an example of a printer). The mobile communication terminal 1 is, for example, an electronic device, such as a smartphone, a tablet terminal, or a laptop or desktop personal computer, capable of wireless communication (or wired communication). The mobile communication terminal 1 transmits, to the handheld printer 2, a print request of information targeted for printing by the handheld printer 2.

The handheld printer 2 is made lightweight and compact by omitting a mechanism to convey a medium (a sheet) on which printing is performed. As illustrated in FIG. 1, a user holds and operates (i.e., moves), with one hand, the handheld printer 2 on a recording medium 3. According to the amount of movement of the handheld printer 2, the handheld printer 2 prints text (that is, characters) or an image on the recording medium 3 according to the print data (of the information targeted for printing) received from the mobile communication terminal 1.

Hardware Configuration of Mobile Communication Terminal

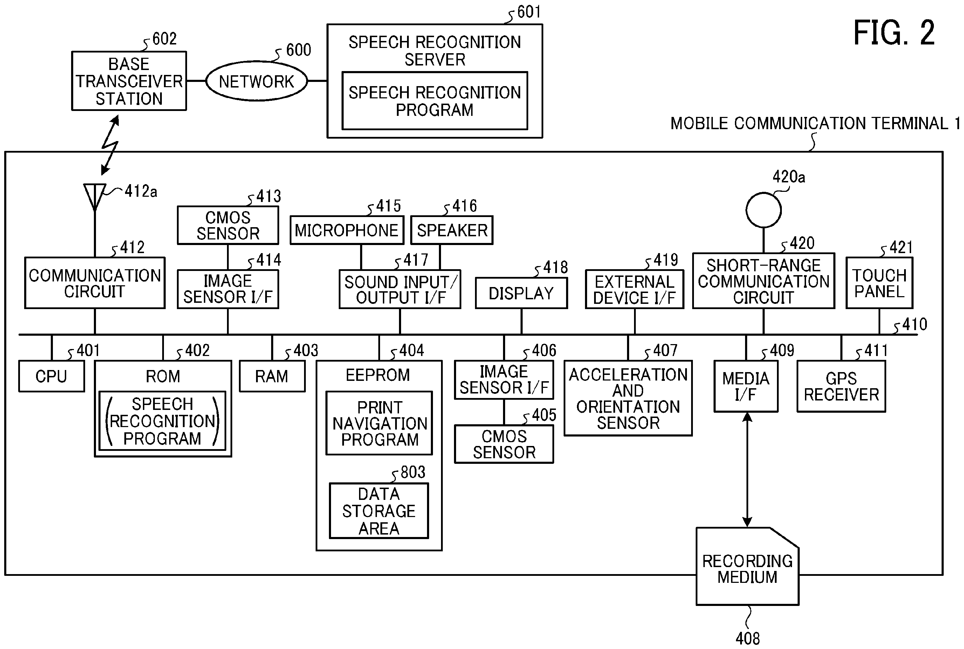

FIG. 2 is a block diagram illustrating a hardware configuration of the mobile communication terminal 1. As illustrated in FIG. 2, the mobile communication terminal 1 includes a central processing unit (CPU) 401, a read only memory (ROM) 402, a random access memory (RAM) 403, an electrically erasable programmable read-only memory (EEPROM) 404, a complementary metal oxide semiconductor (CMOS) sensor 405, an image sensor interface (I/F) 406, an acceleration and orientation sensor 407, a media I/F 409, and a global positioning system (GPS) receiver 411.

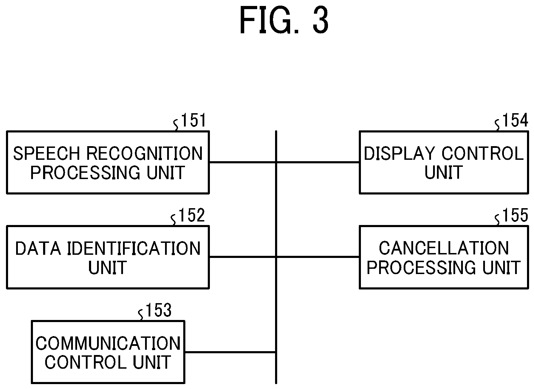

The CPU 401 controls the entire operation of the mobile communication terminal 1. The ROM 402 stores programs of an operating system (OS) used by the CPU 401 or by an initial program loader (IPL) to boot the CPU 401. Further, as an example, the OS includes a speech recognition program for recognizing voice. When the mobile communication terminal 1 performs speech recognition, the mobile communication terminal 1 performs speech recognition according to the speech recognition program. Specifically, the CPU 401 (a speech recognition processing unit 151 in FIG. 3) of the mobile communication terminal 1 recognizes the speech acquired from the microphone 415 according to the speech recognition program included in the OS. Then, based on the recognition result, the CPU 401 acquires printing target information, such as an image, instructed by the user, from the data storage area 803 (an example of a storage area), generates a print request of the information targeted for printing, and transmits the request to the handheld printer 2. At this time, the CPU 401 (a display control unit 154 in FIG. 3) displays a preview of a printed state of the information targeted for printing, on the display 418. As a result, the user can confirm the information targeted for printing by the handheld printer 2 before the handheld printer 2 performs printing.

Alternatively, for example, a speech recognition server 601 (an external speech recognition device) connected to a public network such as the Internet or a private network such as a local area network (LAN) may store the speech recognition program to implement the speech recognition function. In this case, the CPU 401 of the mobile communication terminal 1 transmits the voice acquired from the microphone 415 to the speech recognition server 601 via the base transceiver station 602 and the network 600. The CPU of the speech recognition server 601 recognizes the speech received from the mobile communication terminal 1 according to the speech recognition program stored in the storage area of the speech recognition server 601 and transmits the recognition result to the mobile communication terminal 1 via the network 600 and the base transceiver station 602. The CPU 401 of the mobile communication terminal 1 acquires printing target information, such as an image, corresponding to the recognition result of speech received from the speech recognition server 601, from the data storage area 803, generates a print request of the information, and transmits the print request to the handheld printer 2.

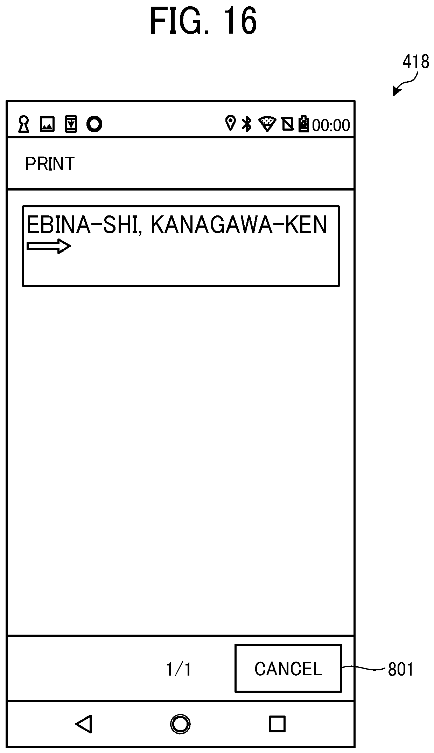

At this time, it is difficult for the user to know whether or not the printing target information, identified based on the speech recognition result, matches the information intended by the user for panting. Therefore, at this time, the CPU 401 displays a preview of a printed state of the printing target information, on the display 418, which will be described in detail with reference to FIGS. 16 to 21. As a result, the user can confirm the printing target information to be printed by the handheld printer 2 before the handheld printer 2 performs printing.

The RAM 403 is used as a work area for the CPU 401. The EEPROM 404 performs reading or writing of various data such as a mobile communication terminal program under control of the CPU 401. Further, the EEPROM 404 stores a data generation program (an example of information processing program) for generating a print request of information targeted for printing, to be transmitted to the handheld printer 2.

The CMOS sensor 405 generates image data corresponding to image capture light from a subject, under the control of the CPU 401. In addition to the CMOS sensor, or alternative to the CMOS sensor, a different image capture device such as a charge-coupled device (CCD) image sensor may be used.

The image sensor I/F 406 is an interface for connecting the CMOS sensor 405 to a bus line 410. Examples of the acceleration and orientation sensor 407 include various sensors such as an electromagnetic compass to detect geomagnetism, a gyrocompass, and an accelerometer. The media I/F 409 is an interface for connecting a recording medium 408 such as a flash memory to the bus line 410. To and from the recording medium 408, for example, printing target information is written and read out via the media I/F 409. The printing target information can be stored in another storage area such as the ROM 402 or the RAM 403. The GPS receiver 411 receives a GPS signal from a GPS satellite.

The mobile communication terminal 1 further includes a long-range communication circuit 412, a CMOS sensor 413, an image sensor I/F 414, a microphone 415, a speaker 416, a sound input/output I/F 417, a display 418, an external device I/F 419, a short-range communication circuit 420, an antenna 420a for the short-range communication circuit 420, and a touch panel 421.

The long-range communication circuit 412 communicates with other devices via a communication network 412a. The CMOS sensor 413 captures an image of a subject and generates image data under the control of the CPU 401. The image sensor I/F 414 is an interface for connecting the CMOS sensor 413 to the bus line 410. The microphone 415 functions as a voice input device, and collects voice of a user designating the information targeted for printing, such as an image or text. The speaker 416 outputs sound such as music or voice corresponding to the audio signal. The sound input/output I/F 417 is a circuit for inputting and outputting an audio signal between the microphone 415 and the speaker 416 under control of the CPU 401.

The display 418 can be, for example, a liquid crystal display, an organic electro luminescence (EL) display, or the like. The external device I/F 419 is an interface for connection with various external devices. The short-range communication circuit 420 is a communication circuit in compliance with the near field communication (NFC), the Bluetooth (registered trademark), and the like. The touch panel 421 is disposed on the display 418 and detects a touch (contact operation) of the user.

The mobile communication terminal 1 further includes the bus line 410. The bus line 410 is, e.g., an address bus or a data bus configured to electrically connect the components such as the CPU 401 illustrated in FIG. 2.

Functional Configuration of Mobile Communication Terminal

FIG. 3 is a block diagram illustrating functions implemented by the CPU 401 operating according to the data generation program stored in the mobile communication terminal 1. As illustrated in FIG. 3, the CPU 401 of the mobile communication terminal 1 operates according to the data generation program to function as the speech recognition processing unit 151, a data identification unit 152, a communication control unit 153, the display control unit 154, and a cancellation processing unit 155.

As described above, in the case of the mobile communication terminal 1 having the speech recognition function, the speech recognition processing unit 151 recognizes the speech acquired by the microphone 415. On the other hand, in the case where the speech recognition server 601 on the network 600 has the speech recognition function, the speech recognition processing unit 151 transmits the voice acquired by the microphone 415 via the communication control unit 153 to the speech recognition server 601. Then, the speech recognition processing unit 151 acquires a speech recognition result returned from the speech recognition server 601.

The data identification unit 152 serving as an identifying unit identifies, among information stored in the data storage area 803, printing target information targeted for printing, such as an image or text, corresponding to the speech (recognition result) recognized by the speech recognition processing unit 151. The communication control unit 153 communicates with the speech recognition server 601 via the base transceiver station 602 and the network 600.

The display control unit 154 displays, on the display 418, for example, a list screen of information targeted for printing and screens corresponding to a speech recognition process and transfer of a print request of information. In addition, the display control unit 154 displays, on the display 418, a preview of the information, such as an image or text, identified as the target of printing. The cancellation processing unit 155 cancels the current operation in response to an instruction of cancellation by speech or operation of a button.

Each of the speech recognition processing unit 151 to the cancellation processing unit 155 illustrated in FIG. 3 is implemented by software according to the data generation program. However, all or a part of these functional units may be implemented by hardware such as an integrated circuit (IC).

In another example, the data generation program is stored in a computer-readable recording medium such as a compact disc read only memory (CD-ROM) and a flexible disk (FD), in an installable or executable file format, for distribution. In still another example, the data generation program is stored in a computer-readable recording medium such as a compact disc-recordable (CD-R), a digital versatile disk (DVD), a Blu-ray Disc (registered trademark), and a semiconductor memory, for distribution. In still another example, the data generation program is installable through a network such as the Internet. In still another example, the data generation program is preloaded in a ROM, etc., of the mobile communication terminal 1.

(Storing Printing Target Information)

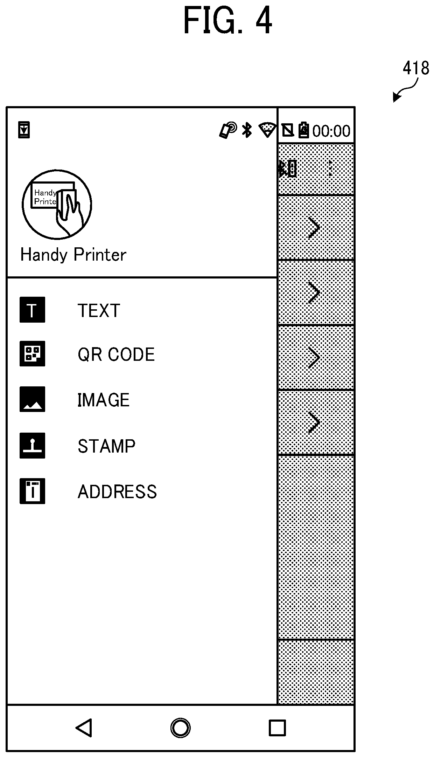

Next, a description is given of printing target information, which is stored in the data storage area 803 of the EEPROM 404 of the mobile communication terminal 1. FIG. 4 is a diagram illustrating a list screen of printing target information in the data storage area 803 of the mobile communication terminal 1. In the example illustrated in FIG. 4, the data storage area 803 stores printing target information that are classified in text, Quick Response (QR) code (registered trademark), image, stamp, and address classifications. Each information is pre-registered in one of the classifications via the registration screen by the user or the like of the mobile communication terminal 1, and is changed or set via the edit screen. The data storage area 803 of the mobile communication terminal 1 may store information created by the mobile communication terminal 1 (for example, a smartphone, a tablet terminal, or a notebook or desktop personal computer), or information created by an information processing apparatus (for example, a notebook or desktop personal computer) different from the mobile communication terminal 1.

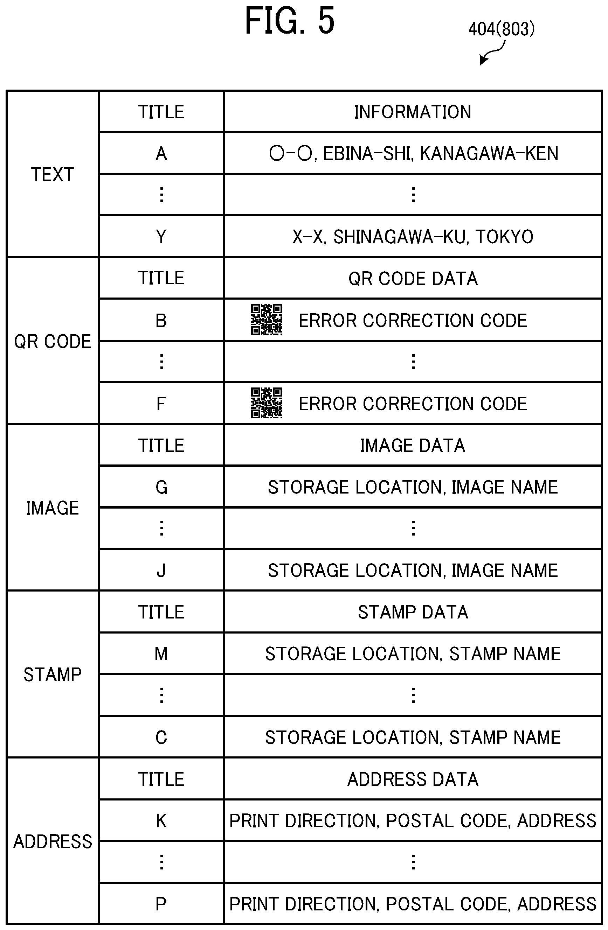

FIG. 5 is a diagram illustrating an example of various types of information stored in the data storage area 803. As illustrated in FIG. 5, the data storage area 803 stores printing target information respectively associated with titles representing user names, such as A, B, and C, and classified into the text, QR code (registered trademark), image, stamp, and address classifications.

Specifically, for example, text data of an address "Ebina-shi, Kanagawa-ken..." is association with the title "A" and stored in the data storage area 803. A QR code (registered trademark) (and an error correction code) is associated with the title "B" and stored in the data storage area 803. Further, an image (and a physical address of the storage location thereof) is associated with the title "J" and stored in the data storage area 803. Further, a stamp (and a physical address of the storage location thereof) is associated with the title "C" and stored in the data storage area 803. Further, data indicating the printing direction, a postal code, and an address are associated with the title "P" and stored in the data storage area 803.

In the example illustrated in FIG. 5, respective titles (for example, user names) of a plurality of information are different among all the classifications. That is, in the example illustrated in FIG. 5, only one data of one classification is assigned to one user and stored.

External Configuration of Handheld Printer

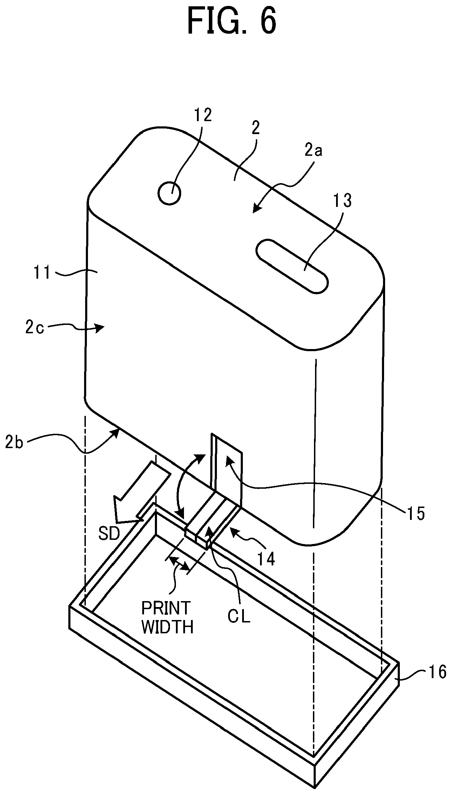

FIG. 6 is a perspective view illustrating an exterior of the handheld printer 2. As illustrated in FIG. 6, the handheld printer 2 includes a box-shaped housing 11 that can be grasped by the user with one hand. A power button 12 and a print start button 13 are disposed on an upper face 2a of the housing 11. The power button 12 and the print start button 13 are light emitting operation buttons using, for example, a light emitting diode (LED).

The period from the operation of the power button 12 to the next operation of the power button 12 is the power-on period of the handheld printer 2. The power button 12 is lit during the power-on period.

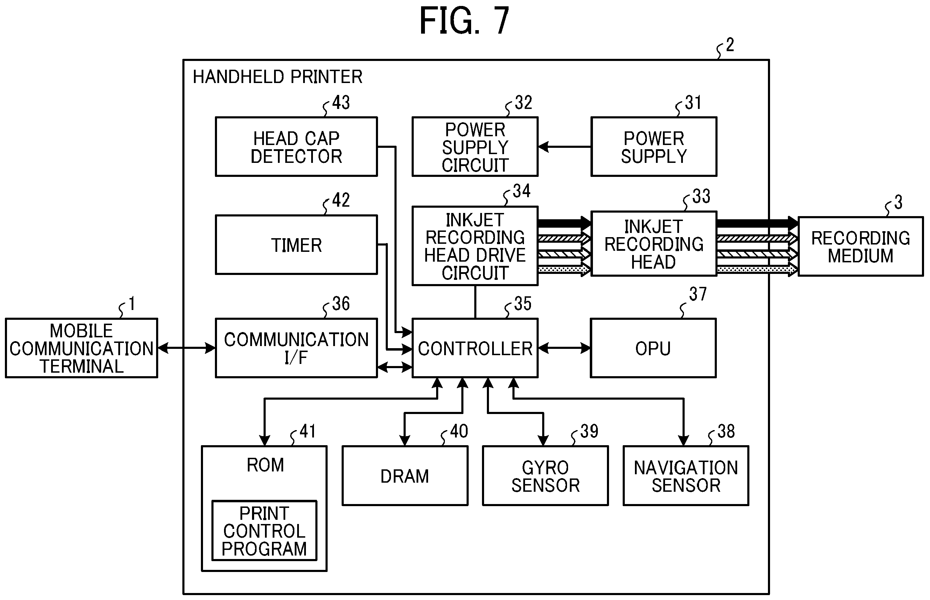

The print start button 13 also serves as an answerback button when a print request of information is received from the mobile communication terminal 1. Specifically, when the handheld printer 2 receives a print request of information from the mobile communication terminal 1, a controller 35 (FIG. 7) causes the print start button 13 to blink a predetermined number of times, for example, five times, to notify the user of the reception of the print request. In response to a reception of a print request of information, the print start button 13 may be controlled to emit light or blink in a different color, or to emit light or (blink) in different brightness or in a different blinking interval.

Alternatively, the housing 11 of the handheld printer 2 may include a display to indicate the reception of a print request of information. Yet alternatively, the handheld printer 2 may include a speaker to output a sound indicating the reception of a print request of information.

Further, when the print start button 13 is operated, the handheld printer 2 performs printing according to the operation of the handheld printer 2 by the user. An inkjet recording head is disposed on a bottom face 2b of the handheld printer 2. The recording head performs printing according to the movement of the handheld printer 2 operated by the user. Further, the operation direction of the handheld printer 2 is usually fixed in the direction indicated by arrow SD in FIG. 6. When the housing 11 is moved in the direction indicated by arrow SD by the user, the inkjet recording head performs printing.

Further, when the housing 11 is moved in a direction other than the direction indicated by arrow SD in FIG. 6, the driving of the inkjet recording head 33 is stopped, and printing is not performed. Note that printing may be permitted in all or some of the directions according to operation direction of the user (switching of the print direction).

Further, a guide 14 is disposed on a lateral side face 2c of the housing 11 facing in the print direction indicated by arrow SD in FIG. 6, so as to project in the print direction (operating direction) indicated by arrow SD. The guide 14 is shaped like a long, rectangular plate. The guide 14 is stored in a storage portion 15 along the lateral side face 2c of the housing 11 when printing is not performed. At the time of printing, when the user hooks his or her finger nail on an upper end of the guide 14 and turns down the guide 14 in the semicircular direction indicated by an arrow, the guide 14 projects in the operation direction indicated by arrow SD from a portion of the lateral side face 2c in the vicinity of the bottom face 2b of the housing 11.

The guide 14 has a width that represents a print width in which printing is performed in one operation. At a center of the guide 14, a center line CL extending from the lateral side face 2c toward the operation direction is provided. As one example, the center line CL is a thin red line. As described above, the width of the guide 14 indicates the width printed by one operation. Therefore, the center line CL indicates the center of the width printed by one operation. Therefore, the user aligns the center line CL with the center of the print start position and moves the handheld printer 2. As a result, information targeted for printing, such as an image or text, can be printed with the center positions aligned.

Further, the handheld printer 2 includes a head cap 16 that covers the bottom face 2b when printing is not performed. Covering the bottom face 2b with the head cap 16 can prevent the recording head from extremely drying in a non-printing period and the inconvenience that the recording head is dusted or scratched.

Hardware Configuration of Handheld Printer

FIG. 7 is a diagram illustrating a hardware configuration of the handheld printer 2. As illustrated in FIG. 7, the handheld printer 2 includes a power supply 31, a power supply circuit 32, an inkjet recording head 33, an inkjet recording head drive circuit 34, a controller 35, a communication I/F 36, an operation panel unit (OPU) 37, a navigation sensor 38, a gyro sensor 39, a dynamic RAM (DRAM) 40, and a ROM 41. Further, the handheld printer 2 includes a timer 42 and a head cap detector 43.

The power supply 31 is rechargeable battery (secondary battery) and generates driving power for the handheld printer 2. The power supply circuit 32 supplies the power from the power supply 31 to necessary components. The inkjet recording head 33 discharges ink to the recording medium 3 by an inkjet method, to print the information targeted for printing, such as an image or text. The inkjet recording head drive circuit 34 controls driving of the inkjet recording head 33 in accordance with the information targeted for printing, such as an image or text. The controller 35 controls the entire handheld printer 2.

The communication I/F 36 is for wireless communication with the mobile communication terminal 1 by short-range wireless communication such as BLUETOOTH (registered trademark). The OPU 37 includes a light emitting diode (LED) for displaying the state of the handheld printer 2, a switch for the user to instruct the handheld printer 2 to start printing, and the like, such as the power button 12 and the print start button 13. The OPU 37 can further include a liquid crystal display or a touch panel. The OPU 37 may further has a voice input capability.

The navigation sensor 38 includes an accelerometer. The navigation sensor 38 detects the amount of movement of the handheld printer 2 in the X-axis direction and the amount of movement in the Y-axis direction, based on the acceleration during the operation of the handheld printer 2. The gyro sensor 39 is configured to detect the angular velocity applied to the handheld printer 2. The DRAM 40 and ROM 41 are storage areas for, for example, print data and operation direction information indicating the operation direction of the handheld printer 2 at the time of printing. Further, the ROM 41 stores a print control program and drive waveform data of the inkjet recording head 33.

In the handheld printer 2 having the above-described configuration, in response to a reception of print request of information from the mobile communication terminal 1, the controller 35 stores generated print data in the DRAM 40 or the like and calculates the position of each nozzle of the inkjet recording head 33 based on information input from the navigation sensor 38 and the gyro sensor 39. While the user operates the handheld printer 2, the controller 35 continuously calculates the position of each discharge nozzle and acquires only the print data corresponding to the calculated position from the DRAM 40. Then, the controller 35 compares the position of the acquired image with the position of each nozzle. When determining the agreement between the compared positions, the controller 35 supplies the print data of the nozzle to the inkjet recording head drive circuit 34.

The inkjet recording head drive circuit 34 supplies print timing information together with the print data to the inkjet recording head 33. Based on the print timing information, the inkjet recording head 33 discharges ink corresponding to the print data onto the recording medium 3. As a result, an image or text is recorded on the recording medium 3 according to the print data designated by the user.

The head cap detector 43 detects whether or not the head cap 16 is attached to the handheld printer 2. The timer 42 measures the time and supplies measured time information to the controller 35. The controller 35 monitors the dry state of the inkjet recording head 33, based on the timekeeping information and whether or not the head cap 16 is attached, and performs warning control or the like at a predetermined timing.

Functional Configuration of Controller

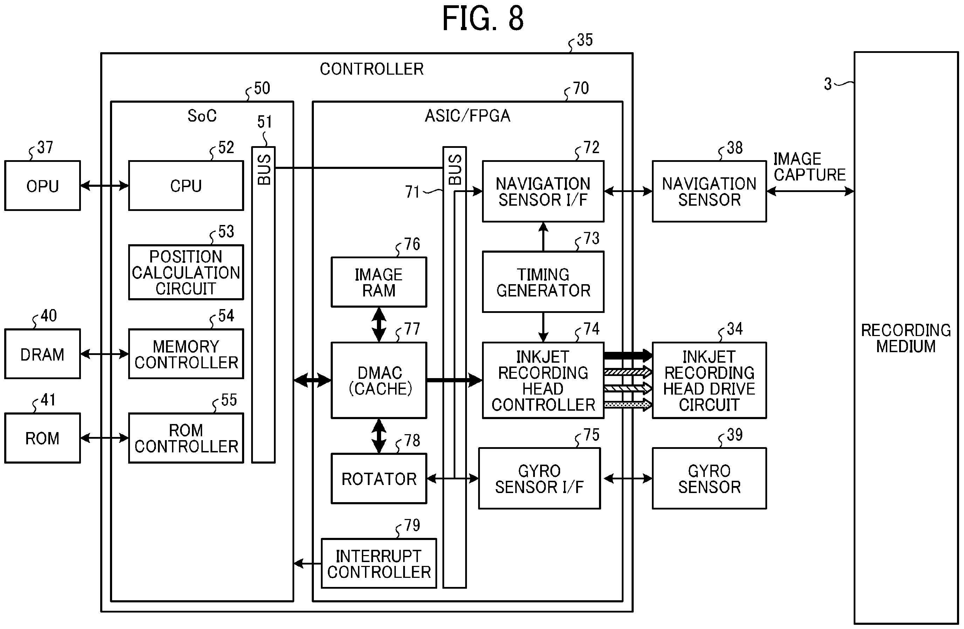

FIG. 8 is a block diagram illustrating a configuration of the controller 35 of the handheld printer 2 illustrated in FIG. 7. As illustrated in FIG. 8, the controller 35 includes a system on chip (SoC) 50 and an application-specific integrated circuit/field-programmable gate array (ASIC/FPGA) 70. The SoC 50 and the ASIC/FPGA 70 is interconnected through respective bus lines 51 and 71.

The SoC 50 includes, in addition to a CPU 52, a position calculation circuit 53 that performs position calculation, a memory controller 54 that controls writing and reading of data to and from an external memory such as a DRAM, and a ROM controller 55 that controls writing and reading of data to and from the ROM 41.

The ASIC/FPGA 70 includes a navigation sensor I/F 72, a timing generator 73 (e.g., a circuit) for print timing and sensing timing, an inkjet recording head controller 74, a gyro sensor I/F 75, an image RAM 76, a direct memory access controller (DMAC) 77, a rotator 78, and an interrupt controller 79.

The navigation sensor I/F 72 stores a movement amount $\Delta X$ in the X-axis direction and a movement amount $\Delta Y$ in the Y-axis direction of the handheld printer 2 in an internal register. The gyro sensor I/F 75 stores an angular velocity $\omega$ received from the gyro sensor 39 in an internal register. The timing generator 73 notifies the navigation sensor I/F 72 of the timing of reading of the information from the navigation sensor 38, and notifies the inkjet recording head controller 74 of the drive timing for printing.

The DMAC (CACHE) 77 and the rotator 78 read the print data around each nozzle of the inkjet recording head 33 from the DRAM 40 (or the ROM 41) based on the position information calculated by the position calculation circuit 53 of the SoC 50. Then, the DMAC (CACHE) 77 and the rotator 78 rotate the read print data according to the position and inclination of the inkjet recording head 33, and supply the read image data to the inkjet recording head controller 74.

The image RAM 76 temporarily stores the print data read from the DRAM 40 by the DMAC (CACHE) 77. The inkjet recording head controller 74 (a discharge control unit) supplies control signals and the print data to the inkjet recording head drive circuit 34. In response to completion of the communication between the navigation sensor I/F 72 and the navigation sensor 38, the interrupt controller 79 notifies the SoC 50 of the completion of the communication therebetween. The interrupt controller 79 also notifies the SoC 50 of a status such as an error.

Printing Operation of Handheld Printer

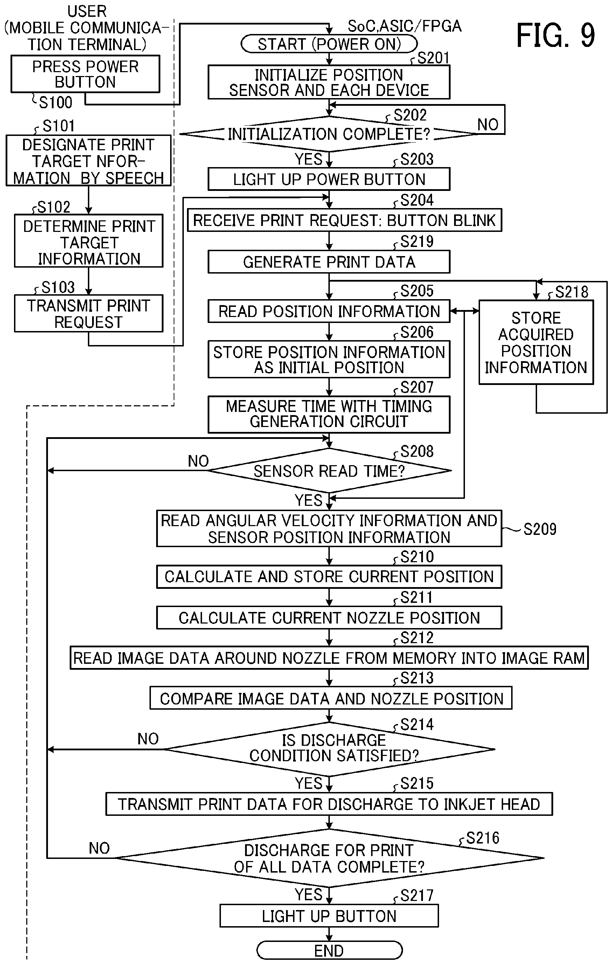

A description is given below of print operation performed by the handheld printer 2 with reference to FIG. 9. The flowchart illustrated in FIG. 9 illustrates operations performed as the CPU 52, illustrated in FIG. 8, of the handheld printer 2, as the CPU 52 reads and executes the print control program illustrated in FIG. 7 from the ROM 41.

In S100, as the user presses the power button 12 of the handheld printer 2, in the handheld printer 2, the power supply 31 supplies power to each part. Then, the SoC 50 (the CPU 52) initializes each electronic device and starts up each device (S201). After the initialization is completed (Yes in S202, for example, the power button 12 is lit up to notify the user that the handheld printer 2 is turned on (S203).

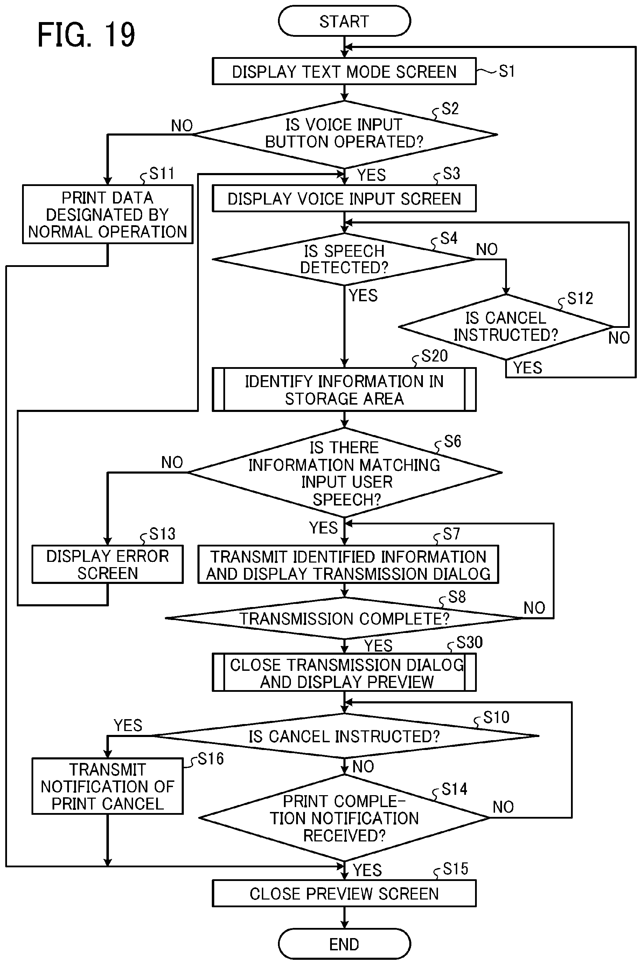

The user inputs voice (speech) to an image input device such as the mobile communication terminal 1 or a personal computer, to designate printing target information in S101. According to the data generation program (or printer driver), the mobile communication terminal 1 reads out printing target information, such as an image or text, designated by speech of the user from the data storage area 803 and displays the information. The user determines the printing target information in S102. Identifying the printing target information, on the mobile communication terminal 1, will be described later with reference to FIG. 19. In S103, the mobile communication terminal 1 transmits, to the handheld printer 2, a print request of the read printing target information, such as an image or a text, via short-range wireless communication such as Bluetooth (registered trademark). The mobile communication terminal 1 previews the printing target information in response to transmission of the print request to the handheld printer 2.

In response to the reception of the print request of printing target information from the mobile communication terminal 1, the SoC 50 (the CPU 52) of the handheld printer 2 performs, for example, blinking of the print start button 13, thereby notifying the user of the reception of the print request (S204). Further, the CPU 52 of the handheld printer 2 generates the print data of the printing target information, based on the print request received from the mobile communication terminal 1 (S219). Alternatively, the mobile communication terminal 1 may generate the print data.

As the user moves (operates) the handheld printer 2, the printing target information, such as an image or text, is printed according to the generated print data on the recording medium 3.

The print operation is described in detail. In S205, the SoC 50 (the CPU 52) of the handheld printer 2 instructs each sensor I/F in the ASIC/FPGA 70 to read the information necessary for the position calculation of the navigation sensor 38, with reference to the print start position. The navigation sensor 38 and the gyro sensor 39 start detecting the position information necessary for position calculation and store the position information in an internal memory (S218).

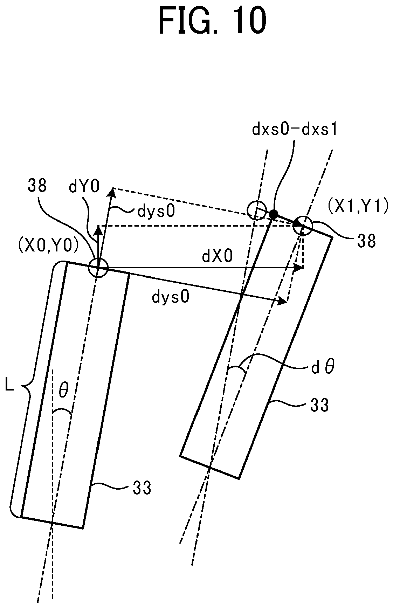

FIG. 10 is a plan view illustrating a position calculation method of the navigation sensor 38. In FIG. 10, the inkjet recording head 33 has a length L. Referring to FIG. 10, an angular velocity co obtained by the gyro sensor 39 is expressed by Equation 1 below.

$$\omega = \frac{d\theta}{dt} \quad \cdots \text{Equation 1}$$

where $d\theta$ represents rotation angle for each sampling period, and dt represents a sampling time. Therefore, an angle $d\theta$ for each sampling period is expressed as Equation 2.

$$d\theta = \omega \times dt \quad \cdots \text{Equation 2}$$

Then, a current angle $\theta$ (time t = 0 to N) is expressed as Equation 3.

$$\theta = \sum_{t=0}^{N} \omega i \times dt \qquad \cdots \text{Equation 3}$$

The angle $d\theta$ obtained from Equation 2 and the current angle $\theta$ obtained from Equation 3 are substituted into Equations 4 to 7 to calculate the two-dimensional coordinates (X1,Y1) from the origin (X0,Y0).

$$dX_0 = dx_{s0} \times \cos\theta + dy_{s0} \times \sin\theta \qquad \cdots \text{Equation 4}$$

$$dY_0 = -dx_{s0} \times \sin\theta + dy_{s0} \times \cos\theta \qquad \cdots \text{Equation 5}$$

$$X1 = X_0 + dX_0 \qquad \cdots \text{Equation 6}$$

$$Y1 = Y_0 + dY_0 \qquad \cdots \text{Equation 7}$$

When the coordinates of the navigation sensor 38 are calculated, the coordinates of each nozzle can be calculated by a known calculation based on the mechanical (physical) positional relationship between the navigation sensor 38 and the nozzle since the layout of the devices are determined in advance.

Next, the navigation sensor I/F 72 communicates with the navigation sensor 38 and reads, as position information, the movement amount $\Delta X$ in the X-axis direction and the movement amount $\Delta Y$ in the Y-axis direction of the handheld printer 2. Further, the gyro sensor I/F 75 communicates with the gyro sensor 39 and reads, as position information, the angular velocity co of the handheld printer 2 (S205). The navigation sensor I/F 72 and the gyro sensor I/F 75 set the position based on the read information as the initial position having, for example, the X coordinate and the Y coordinate "0,0" (S206). After that, the timing generator 73 (a timing generation circuit) inside the ASIC/FPGA 70 measures time (S207). At each read timing set to each sensor (Yes in S208), the navigation sensor I/F 72 and the gyro sensor I/F 75 repeat reading of the above-mentioned information (S209).

The value detected by the navigation sensor 38 (movement amounts in the X-axis direction and Y-axis directions) and the value detected by the gyro sensor 39 (angular velocity $\omega$) are necessary for calculating the current two-dimensional position coordinates with respect to the origin. Accordingly, preferably, such information (values) are read simultaneously.

The SoC 50 (the CPU 52) reads information from the ASIC/FPGA 70 and calculates the current position of the handheld printer 2 from the previously calculated position (X,Y), the movement amount ($\Delta X$, $\Delta Y$) read at that time, and the angular velocity co read at that time. Then, the SoC 50 stores the current position in the storage area (S210).

The SoC 50 (the CPU 52) transmits the calculated current position information of the handheld printer 2 to the ASIC/FPGA 70. The ASIC/FPGA 70 calculates the position coordinates of each nozzle (current nozzle position) of the inkjet recording head 33 based on the predetermined relationship between the installation positions of the navigation sensor 38 and the inkjet recording head 33 (S211).

The DMAC (CACHE) 77 and the rotator 78 of ASIC/FPGA 70 read image data around the nozzles of the inkjet recording head 33 from the storage area based on the position information, and rotate the image data (convert the coordinates) in accordance with the designated position and tilt of the inkjet recording head 33 (S212). Then, the coordinates of the image data and each nozzle position are compared (S213). In response to a determination that a set discharge condition is satisfied (S214: Yes), the print data is transmitted to the inkjet recording head controller 74 (S215).

By repeatedly executing the processes from S208 to S215, the SoC 50 (the CPU 52) controls printing of the printing target information (e.g., an image or text) on the recording medium 3. In response to a determination that the printing of the entire image is completed (S216: Yes), the SoC 50 (the CPU 52) controls the power button 12 or the print start button 13 to blink (S217) in order to notify the user of the completion of printing.

Even when the printing of the entire image has not been completed, the user may determine that subsequent printing is unnecessary and operate the print start button 13. As a result, subsequent printing is cancelled. Processes in the flowchart illustrated in FIG. 9 can be divided and assigned to the SoC 50 and the ASIC/FPGA 70 according to the performance of the CPU 52, the circuit scale of the ASIC/FPGA 70, and the like.

(Operation of Mobile Communication Terminal for Printing)

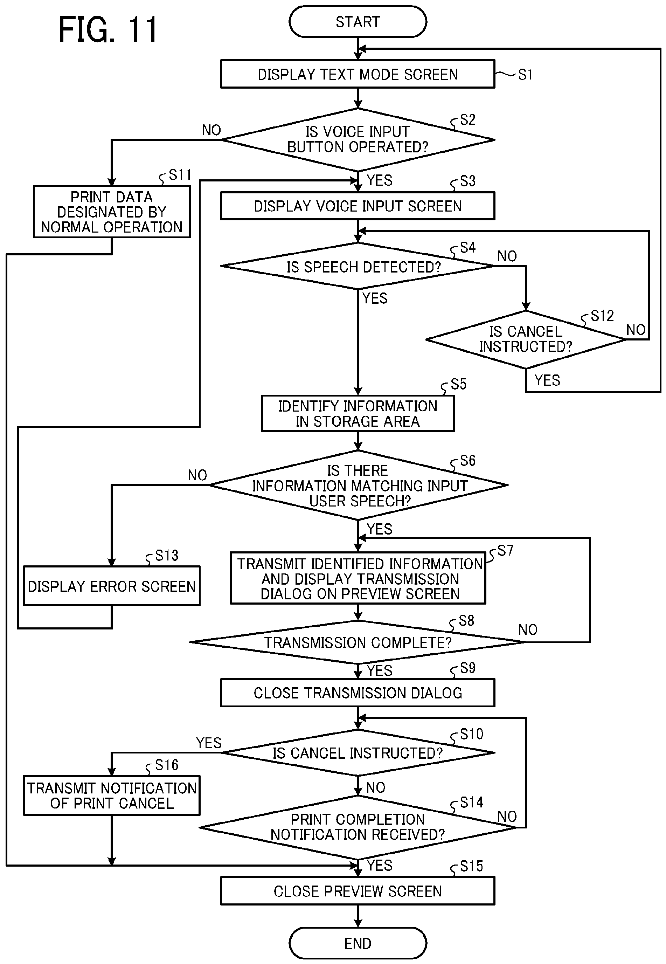

FIG. 11 is a flowchart illustrating a flow of print processing operations of the mobile communication terminal 1, corresponding to voice input. The processes illustrated in the flowchart of FIG. 11 are executed by the CPU 401 of the mobile communication terminal 1 in order starting from S1, according to the data generation program.

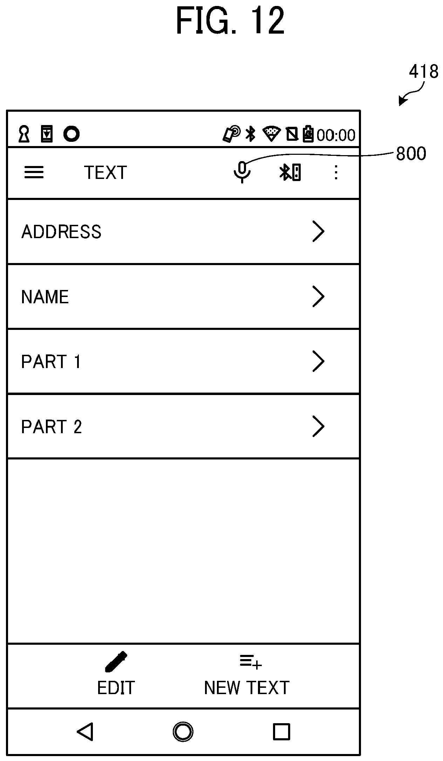

The user first operates the mobile communication terminal 1 to instruct print start. The operation for instructing print start may be operating a hardware or software button, or may be voice input. In response to a reception of a print start instruction, the display control unit 154 of the mobile communication terminal 1 illustrated in FIG. 3 displays, for example, a default screen illustrated in FIG. 12 on the display 418. As an example, the default screen is a text mode screen for displaying text data stored in the data storage area 803.

The default screen includes a voice input button 800 for designating voice input. When the user designates voice input, the user operates the voice input button 800. In S2 of the flowchart of FIG. 11, the speech recognition processing unit 151 determines whether or not the voice input button 800 is operated. When the voice input button 800 is not operated (S2: No), the CPU 401 performs print processing of the data identified by the normal selection process without using speech recognition (S11).

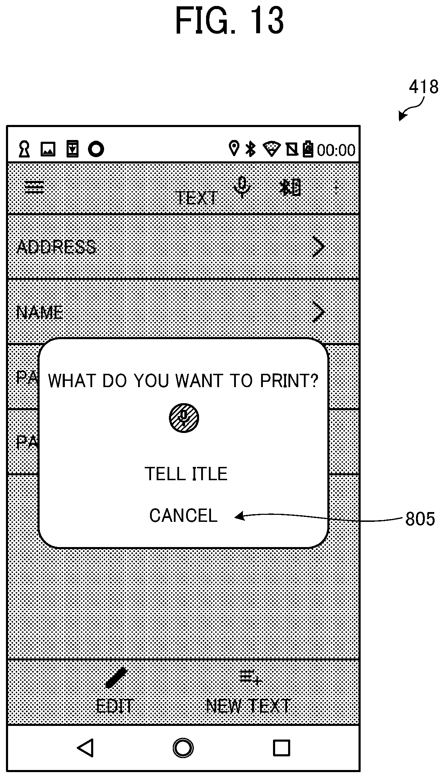

On the other hand, in response to a detection of the operation of the voice input button 800 (S2: Yes), the display control unit 154 displays a voice input screen illustrated in FIG. 13 on the display 418 (S3). In addition to displaying such a voice input screen, the CPU 401 turns on the microphone 415 to acquire voice of the user.

When the voice input screen is displayed, the user inputs, to the microphone 415 of the mobile communication terminal 1, speech to designate printing target information, such as an image or text. In S4, the speech recognition processing unit 151 determines the presence or absence of the speech of the user.

As illustrated in FIG. 13, the voice input screen includes a cancel button 805 for instructing the cancellation of the voice input. The cancellation processing unit 155 monitors whether or not the cancel button 805 is operated in S12 while the speech recognition processing unit 151 does not detect a speech of the user (S4: No). Then, when the cancellation processing unit 155 detects the operation of the cancel button 805 (S12: Yes), the CPU 401 returns to S1, and the display control unit 154 again displays the default screen illustrated in FIG. 12 on the display 418. Note that the user may instruct such cancellation by voice input.

In response to a detection, by the speech recognition processing unit 151, of speech input from the user (S4: Yes), the data identification unit 152 determines whether any of the various information registered in the data storage area 803 matches the speech of the user, and identifies the information matching the recognition result of the input speech by the user, based on the determination result (S5).

Specifically, in the case of speech recognition on the mobile communication terminal 1 side, the speech recognition processing unit 151 recognizes the input speech based on the speech recognition function included in the OS. Then, the speech recognition processing unit 151 refers to the data storage area 803 based on the recognition result, and identifies the information corresponding to the input speech.

On the other hand, in the case of speech recognition on the speech recognition server 601 side, the speech recognition processing unit 151 transmits the speech acquired by the microphone 415, via the communication control unit 153 and the long-range communication circuit 412, to the speech recognition server 601. The speech recognition server 601 recognizes the received speech according to the speech recognition program and returns the recognition result to the mobile communication terminal 1. The speech recognition processing unit 151 of the mobile communication terminal 1 refers to the data storage area 803 based on the recognition result received from the speech recognition server 601 and identifies the information corresponding to the input speech.

Specifically, as described with reference to FIG. 5, the data storage area 803 stores one or more information (possible printing target information) each assigned with a different title (for example, user name) among all the classifications. That is, in the data storage area 803, one title is associated with only one classification of information. Specifically, for example, text data of an address "Ebina-shi, Kanagawa-ken..." is stored in association with the title "A." Additionally, one QR code (registered trademark) is stored in association with the title "F."

Therefore, in response to an input speech of the title "A" by the user, the data identification unit 152 identifies the text data of the address associated with the title "A" from the data storage area 803. Further, in response to an input speech of the title "F," the data identification unit 152 identifies the QR code (registered trademark) associated with the title "F" from the data storage area 803.

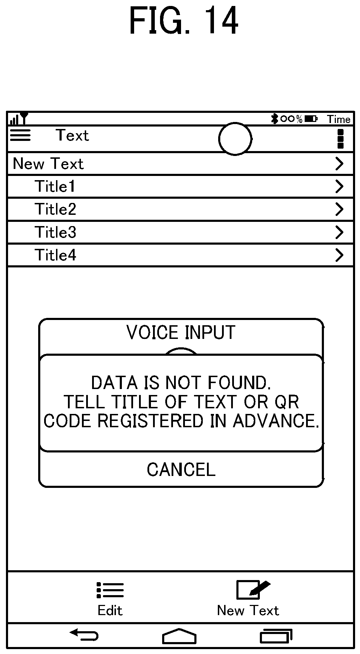

When none of information stored in the data storage area 803 matches the recognition result of the input speech, the data identification unit 152 does not identify the information corresponding to the input speech in the data storage area 803 (S6: No). In this case, the display control unit 154 displays, for example, an error screen illustrated in FIG. 14 on the display 418 for a certain period of time (S13). FIG. 14 illustrates an example of the error screen presenting an error message such as, "Data is not found. Tell the title of text or QR code registered in advance," to prompt the user to again perform speech input. In response to display of such an error screen for a certain period of time by the display control unit 154, the process returns to S3. Then, the display control unit 154 redisplays the voice input screen illustrated in FIG. 13.

When the data storage area 803 stores the information that matches the recognition result of the input speech, and the information corresponding to the input speech is identified in the data storage area 803 (S6: Yes), the communication control unit 153 controls the short-range communication circuit 420 (an example of a transmission unit) to transmit a print request of the identified printing target information to the handheld printer 2 (S7). That is, in the above example, since "A" is input by speech, the text data of the address associated with the title "A" is transmitted to the handheld printer 2.

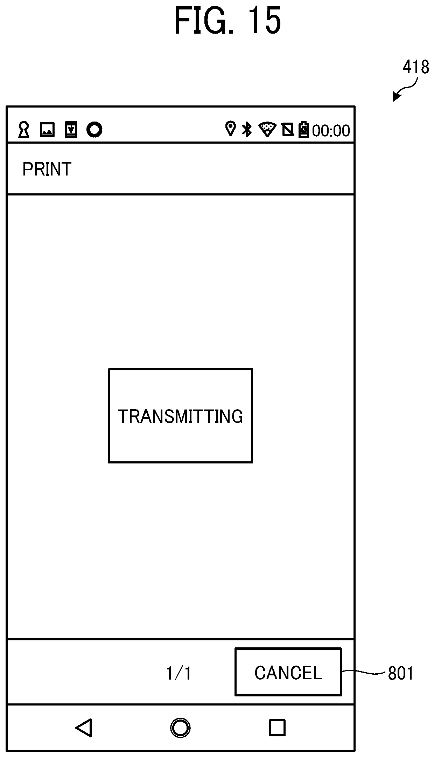

In response to transmission of the print request, the display control unit 154 displays a preview screen for displaying the printing target information, such as an image or text. In addition, while the data is being transferred, the display control unit 154 indicates that the print request is being transmitted on the display 418. For example, the display control unit 154 displays a transmission dialog such as that illustrated in FIG. 15, in the manner superimposed on the preview screen on the display 418. As a result, the user can aware that the data is being transmitted.

Next, in S8, the communication control unit 153 determines whether or not the data transmission to the handheld printer 2 is completed. In response to a determination, by the communication control unit 153, that the transmission of the printing target information to the handheld printer 2 is completed (S8: Yes), the display control unit 154 hides the transmission dialog superimposed on the preview screen (S9). In the present embodiment, the transmission dialog is superimposed on the preview screen, but the manner of display is not limited thereto. Alternatively, for example, only the transmission dialog is displayed, and, after the transmission is completed, the transmission dialog is hidden, and the preview screen is displayed.

For example, FIG. 16 illustrates an example of a preview screen of the text data of the address corresponding to the title "A" input by speech. In this case, the display control unit 154 sets the font size of the preview to full size of the font size of the characters representing the printing target information. The term "full size" represents enlarging or reducing without changing the aspect ratio. This configuration enables the user to visually recognize the size of the characters actually printed, and prevent printing failure.

Further, based on the above-mentioned print direction data, the display control unit 154 displays the print direction of the address (that is, the operation direction of the handheld printer 2) by an animation in which the arrow icon moves from the left to the right on the surface on which FIG. 16 is drawn. The printing processing does not start until the user operates the handheld printer 2. The display control unit 154 keeps displaying the identified printing target information on the display 418. Accordingly, the user can visually recognize whether the printing target information transmitted to the handheld printer 2 is the information intended for printing by the user. Thus, printing failure can be prevented.

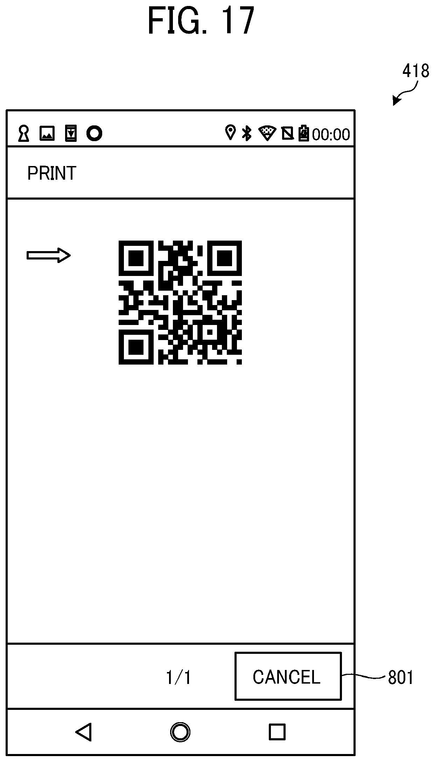

Further, FIG. 17 illustrates an example of a preview screen of a QR code (registered trademark) corresponding to the title "F" input by speech. In this case as well, the display control unit 154 displays a preview of the QR code (registered trademark) in full size of the QR code (registered trademark) to be printed. Further, based on the above-mentioned print direction data, the display control unit 154 displays an animation of an arrow icon indicating the print direction of the QR code (registered trademark), that is, the operation direction of the handheld printer 2.

Further, the display control unit 154 displays a cancel button 801 for instructing the cancellation of printing, on the display 418, together with such a preview screen.

In response to a detection, by the display control unit 154, of the operation of the cancel button 801 (S10: Yes), the communication control unit 153 transmits, to the handheld printer 2, a notification of the cancellation of the print request (S16). Thus, the communication control unit 153 controls the handheld printer 2 to delete the data (identified information) acquired from the mobile communication terminal 1. Further, when the notification of the cancellation of the print request is transmitted to the handheld printer 2, the display control unit 154 hides the above-mentioned preview screen in S15. Thus, the flow of operations in the flowchart of FIG. 11 completes.

With the preview display, the user recognizes the printing direction and the size of printing target information, such as an image or text, and operates the handheld printer 2 to print the information designated by speech input. When the printing is completed, the handheld printer 2 transmits a print completion notification to the mobile communication terminal 1. The display control unit 154 monitors the presence or absence of the print completion notification from the handheld printer 2 (S14). In response to a reception of the print completion notification (S14: Yes), in S15, the display control unit 154 displays the above-mentioned preview screen. Then, the flow of operations in the flowchart of FIG. 11 is completed.

The first embodiments provides the following effects.

As described above, the printing system of the first embodiment displays, on the display 418, a preview of printing target information, such as an image, designated to be printed by a speech input by the user, before the handheld printer 2 performs the printing. As a result, the user can confirm the printing target information, such as an image to be printed, before the handheld printer 2 actually performs the printing. Thus, printing failure can be prevented.

A description is given of a second embodiment of the present disclosure.

In the first embodiment, a plurality of information classified in different classifications have titles different from each other. The second embodiment is different from the first embodiment in that when the classifications are different, there are two or more different printing target information having the same title. In the following description of the second embodiment, descriptions of the same parts as in the first embodiment will be omitted, and portions different from the first embodiment will be described.

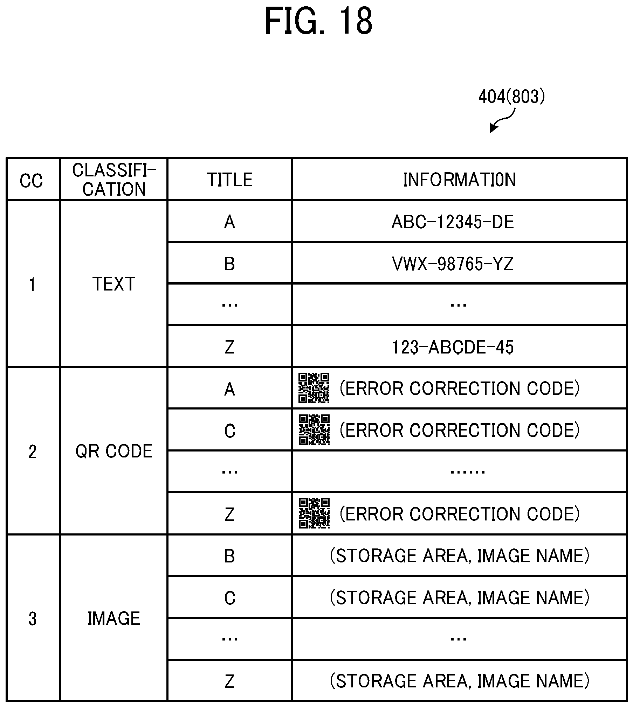

FIG. 18 is a diagram illustrating an example of various types of information stored in the data storage area 803, according to the second embodiment. As illustrated in FIG. 18, the data storage area 803 stores printing target information, which are associated with titles representing part names, such as part A, part B, and part C, and classified into the text, QR code (registered trademark), and image classifications. As illustrated in FIG. 18, a value N (1 to 3 in FIG. 18) of classification code ("CC" in FIG. 18) is assigned to each of the text, QR code, and image classifications. The classification code of text is "1," the classification code of QR code is "2," and the classification code of image is "3."

Specifically, for example, the text data "ABC-12345-DE" is associated with the title "Part A" in the text classification and stored in the data storage area 803. Further, a QR code (and an error correction code) is associated with the title "Part A" in the QR code classification and stored in the data storage area 803.

That is, in the example illustrated in FIG. 18, when the classifications are different, there are different printing target information having the same title (for example, the part name).

A description is given of print processing operations performed by the mobile communication terminal 1, corresponding to voice input.

FIG. 19 is a flowchart illustrating a flow of print processing operations performed by the mobile communication terminal 1, corresponding to voice input. The processes in the flowchart illustrated in FIG. 19 are executed by the CPU 401 of the mobile communication terminal 1 in order starting from S1, according to the data generation program, similar to the processes in the flowchart illustrated in FIG. 11. The processes in S1 to S3 are same as those in FIG. 11, and thus redundant descriptions are omitted.

In response to a detection of a user's speech by the speech recognition processing unit 151 (S4: Yes), the data identification unit 152 determines whether information matching the input user' speech is present among the various information registered in the data storage area 803, and identifies information matching the recognition result of the input user's speech based on the determination result (S20). The processes for identifying the information in S20 in the present embodiment are described in detail below.

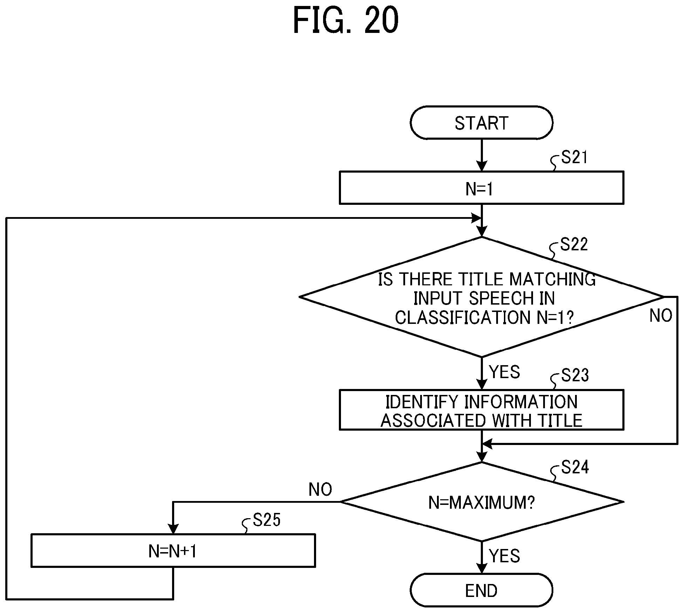

FIG. 20 is a flowchart illustrating the flow of processes for identifying the information in S20. As illustrated in FIG. 20, the data identification unit 152 sets the value N of the classification code to "1" (N = 1) in S21, and determines whether or not there is a title matching the input speech in the classification of the classification code "1" in S22.

In response to a determination that there is a title matching the speech input in the classification of the classification code "1" (S22: Yes), the data identification unit 152 identifies the printing target information associated with the title (S23). Then, the process proceeds to S24.

On the other hand, in response to a determination that there is no title matching the speech input in the classification of the classification code "1" (S22: No), the data identification unit 152 proceeds the process directly to S24.

In S24, the data identification unit 152 determines whether the value N of the classification code is the maximum value ("3" in this example).

In response to a determination that the value N of the classification code is not the maximum value ("3" in this example) (S24: No), the data identification unit 152 increments the value N of the classification code by "1" (S25), and returns to S22.

On the other hand, in response to a determination that the value N of the classification code is the maximum value ("3" in this example) (S24: Yes), the data identification unit 152 ends the processes in S20, and returns to S6.

Specifically, as described above with reference to FIG. 18, the data storage area 803 stores printing target information, which are respectively associated with titles representing part names such as part A, part B, and part C and classified into the text, QR code (registered trademark), and image classifications. When the classifications are different, the data storage area 803 may store two or more printing target information that are different from each other, but have the same title. Therefore, when the user inputs the title "Part A" by speech, the data identification unit 152 identifies the text data "ABC-12345-DE" and the QR code (and the error correction code) both associated with the title "Part A" in the data storage area 803.

As described above, in the present embodiment, since one title may be associated with a plurality of printing target information, the process of displaying a preview screen is different from that of the first embodiment. A description is given in detail below of the operation of the display control unit 154 performed in S30, to display a preview screen in the present embodiment.

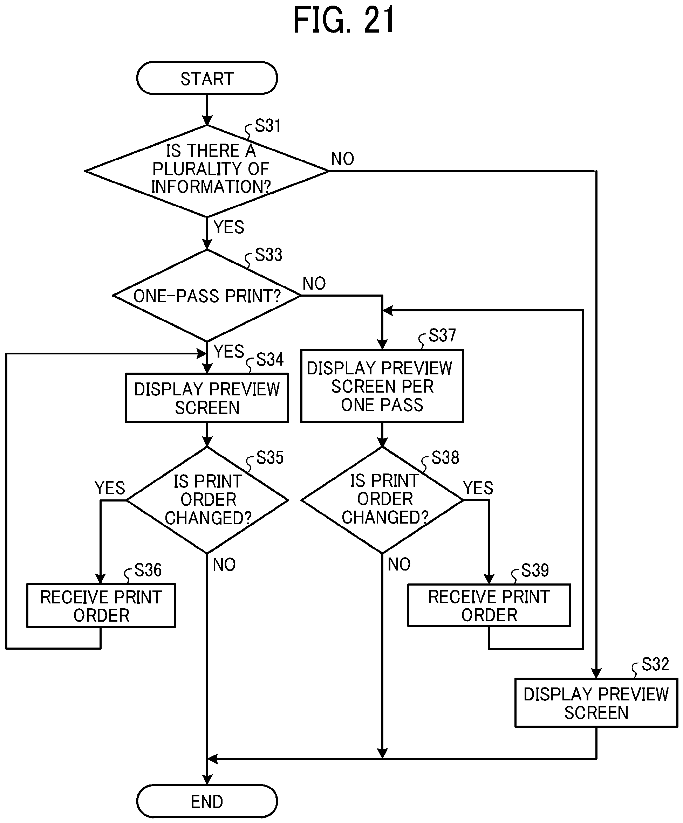

FIG. 21 is a flowchart illustrating the flow of processes for displaying a preview screen in S30. As illustrated in FIG. 21, the display control unit 154 determines whether there is a plurality of printing target information, transmitted by the communication control unit 153 (S31).

When the display control unit 154 determines there is not a plurality of transmitted printing target information (S31: No), the display control unit 154 displays, on the display 418, a preview screen of single printing target information (S32), and ends the processes in S30. Then, the display control unit 154 proceeds the process to S10.

On the other hand, when the display control unit 154 determines that there is a plurality of printing target information having the same title (S31: Yes), the display control unit 154 determines whether to perform one-pass print or multi-pass print (S33).

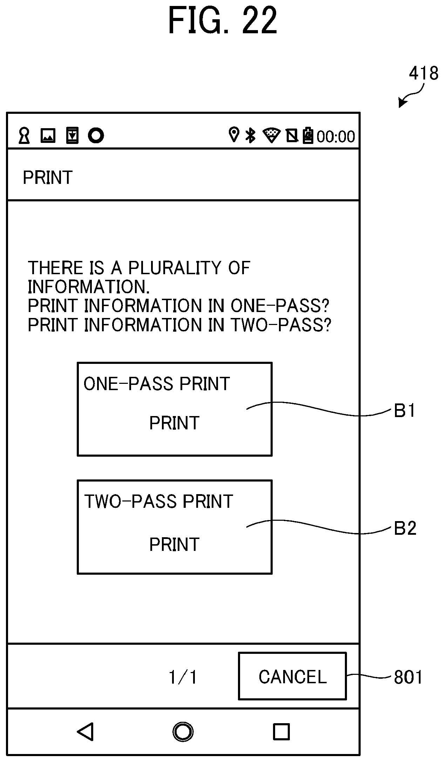

FIG. 22 is a diagram illustrating an example of a confirmation screen. As illustrated in FIG. 22, for each determination that there is a plurality of printing target information having the same title, the display control unit 154 displays a confirmation screen as to whether to print the information in one pass or multiple passes, so as to prompt the user to input the confirmation. In the example illustrated in FIG. 22, the confirmation screen includes a "one-pass print" button B1 for designating printing the information in one pass, and a "two print" button B2 for designating printing the information in multiple passes (two passes in this example). The operator operates either the "one-pass print" button B1 or the "two-pass print" button B2 on the confirmation screen illustrated in FIG. 22. As a result, the display control unit 154 can determine whether to print the information in one pass or multiple passes.

The determination of whether to print the information in one pass or multiple passes is not limited to the above-described example in which, at each determination that there is a plurality of information, the confirmation screen is displayed and the operator is required to input the confirmation. Alternatively, the display control unit 154 displays, for example, an initial setting screen that allows the user to preliminarily set whether to print a plurality of printing target information in one pass or multiple passes. Based on such a setting, the display control unit 154 can determine whether to print the information in one pass or multiple passes.

When the display control unit 154 determines that the information is to be printed in one pass (S33: Yes), the display control unit 154 displays a preview screen including previews of all the printing target information on the display 418 (S34), and proceeds to S35.

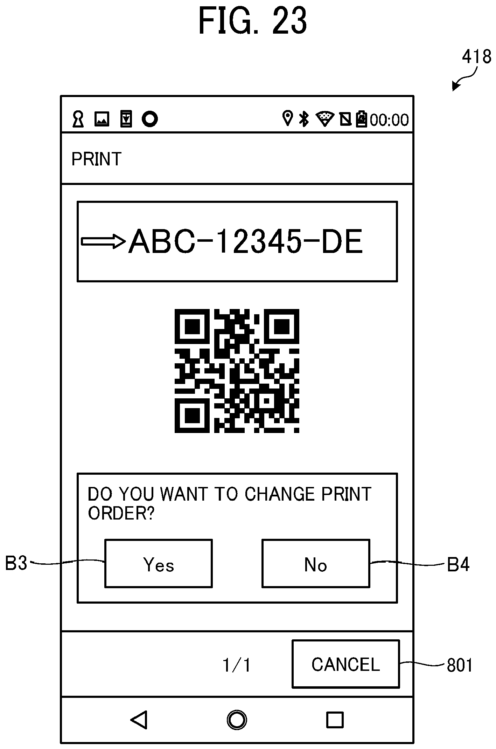

FIG. 23 is a diagram illustrating an example of a preview screen. In the example illustrated in FIG. 23, the preview screen presents a preview of the text data "ABC-12345-DE" and a preview of the QR code (and error correction code), which are printing target information.

In S35, the display control unit 154 waits for the operation of changing the print order of the plurality of printing target information having the same title. For example, the following operation is performed for changing the print order of the plurality of printing target information having the same title. For example, as illustrated in FIG. 23, the display control unit 154 displays a message "Do you want to change the print order?" on the display 418, together with a "Yes" button B3 and a "No" button B4. When the operator operates the "Yes" button B3 in such a state, the operator can change the print order of the plurality of printing target information having the same title.

For example, the print order of a plurality of printing target information can be changed by the following method. For example, the operator drags and drops the preview of the printing target information displayed on the preview screen, to change the print order. As another method, the operator assigns a sequence number to each of the previews of the plurality of printing target information displayed on the preview screen, to change the print order. As yet another method, the operator sequentially operates the respective previews of the plurality of printing target information displayed on the preview screen, to change the print order.

When the display control unit 154 detects the above-described operation to change the print order of the plurality of printing target information having the same title (S35: Yes), the display control unit 154 receives the changed print order (S36). Then, the display control unit 154 returns to S34 and displays a preview screen including the previews of the plurality of printing target information in which the print order has been changed. In the example illustrated in FIG. 23, in which the number of the printing target information is two, since the application automatically changes the order, the process in S36 is skipped.

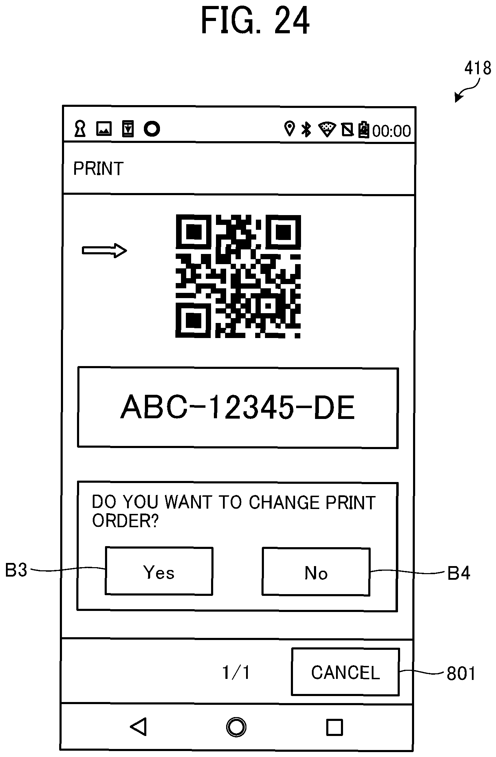

FIG. 24 is a diagram illustrating an example of a preview screen in which the print order has been changed. FIG. 24 illustrates an exampled in which the print order of the text data "ABC-12345-DE" and the QR code (and the error correction code) displayed on the preview screen illustrated in FIG. 23 has been changed.

On the other hand, for example, when the operator operates the "No" button B4 and does not perform an operation for changing the print order of the plurality of printing target information having the same title (S35: No), the display control unit 154 ends the process of S30 and the proceeds to S10.

Further, when the display control unit 154 determines that the information is to be printed in a plurality of passes (S33: No), the display control unit 154 sequentially displays a preview screen presenting a preview of one piece of printing target information in each print pass (S37). Then, the process proceeds to S38.

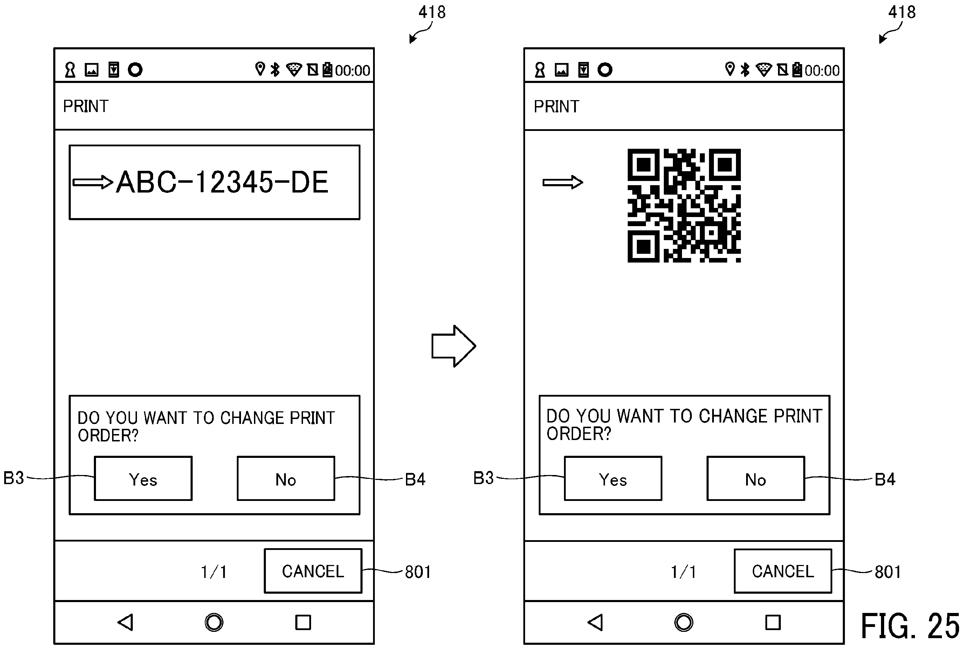

FIG. 25 is a diagram illustrating another example of the preview screen. In the example illustrated in FIG. 25, regarding the plurality of printing target information having the same title, the display control unit 154 displays, on the preview screen, a preview of the printing target information to be printed in the first pass, and then displays a preview of the printing target information to be printed in the second pass. The display control unit 154 displays the preview for each pass in order.

In S38, the display control unit 154 waits for the operation of changing the print order of the plurality of printing target information having the same title. For example, the following operation is performed for changing the print order of the plurality of printing target information. For example, as illustrated in FIG. 25, the display control unit 154 displays a message "Do you want to change the print order?" on the display 418, together with a "Yes" button B3 and a "No" button B4. When the operator operates the "Yes" button B3 in such a state, the operator can change the print order of the plurality of printing target information having the same title.

For example, the print order of a plurality of printing target information can be changed by the following method. For example, the operator assigns sequence numbers to the plurality of printing target information, respectively, displayed on the preview screen, to change the print order.

When the display control unit 154 detects the above-described operation to change the print order of the plurality of printing target information having the same title (S38: Yes), the display control unit 154 receives the changed print order (S39). Then, the display control unit 154 returns to S37 and sequentially displays, for each pass, a preview screen presenting a preview of printing target information in which the print order has been changed.

On the other hand, for example, when the operator operates the "No" button B4 and does not perform an operation for changing the print order of the plurality of printing target information having the same title (S38: No), the display control unit 154 ends the process of S30 and the proceeds to S10.

In the case of printing a plurality of printing target information in a plurality of passes, between the process of S10 and the process of S14, the mobile communication terminal 1 receives a print completion notification from the handheld printer 2, and displays a preview screen for the next pass.

Note that, in the case where the print order is not changed, the printing system may be configured to perform the printing in the presented order when the handheld printer 2 is operated (moved), without receiving operation (e.g., pressing) of the "Yes" button B3 or the "No" button B4.

As described above, the printing system according to the present embodiment displays, on the display 418, respective previews of a plurality of printing target information, such as images, having the same title, designated to be printed by a speech input by the user, before the handheld printer 2 performs the printing. As a result, regarding the plurality of printing target information having the same tile, the operator can confirm the printing target information, such as images to be printed, before the handheld printer 2 actually performs the printing. Thus, printing failure can be prevented.

Although the exemplary embodiments have been described above, such descriptions are not intended to limit the scope of the present disclosure to the illustrated embodiments. The above-described embodiments can be implemented in other various forms, and various omissions, replacements, and changes can be made without departing from the scope of the invention.

For example, the above descriptions concern an example in which the mobile communication terminal 1 performs speech recognition and previews the printing target information, such as a text to be printed. Alternatively, the handheld printer 2 may perform speech recognition and preview the printing target information, such as the text to be printed, on a display of the handheld printer 2.

It is therefore to be understood that each embodiment and each modification thereof are within the scope and summary of the disclosure and within the scope of the appended claims and equivalents thereof.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (1) comprising:

   a voice input device (415) configured to acquire voice;
   an identifying unit (152) configured to identify, in a storage area (803), information as a printing target by a printer (2) based on a recognition result of the voice acquired by the voice input device (415);
   a transmission unit (153) configured to transmit, to the printer (2), a print request of identified information by the identifying unit (152); and
a display control unit (154) configured to display a screen presenting the identified information on a display (418) in response to transmission of the print request by the transmission unit (153).

2. The information processing apparatus (1) according to claim 1,
wherein the display control unit (154) is configured to:

in a case where the identifying unit identifies a plurality of information as printing targets, determine whether to print the plurality of information in one pass or a plurality of passes as a manner of printing; and
change a manner of display of the plurality of information in accordance with the determined manner of printing.

3. The information processing apparatus (1) according to claim 2,
wherein the display control unit (154) is configured to display, on the display (418), a screen presenting the plurality of information in response to a determination to print the plurality of information in one pass.

4. The information processing apparatus (1) according to claim 2,
wherein the display control unit (154) is configured to sequentially display, on the display (418), screens each of which presents one information of the plurality of information, the one information to be printed in one pass, in response to a determination to print the plurality of information in a plurality of passes.

5. The information processing apparatus (1) according to any one of claims 2 to 4,
wherein the display control unit (154) is configured to be able to change a print order of the plurality of information identified by the identifying unit (152).

6. The information processing apparatus (1) according to any one of claims 2 to 5,
further comprising a speech recognition processing unit (151) configured to generate the recognition result of the voice.

7. The information processing apparatus (1) according to any one of claims 2 to 5,
wherein the transmission unit (153) is configured to transmit the voice to an external speech recognition device (601) and acquire the recognition result from the external speech recognition device (601).

8. The information processing apparatus (1) according to any one of claims 1 to 7,
wherein the display control unit (154) is configured to:

indicate, on the display (418), that the print request of the identified information is being transmitted during transmission of the print request to the printer; and
display, on the display (418), the identified information in response to completion of the transmission of the print request.

9. The information processing apparatus (1) according to any one of claims 1 to 8,
wherein the display control unit (154) is configured to display, on the display (418), the screen presenting the identified information in a size same as a size of the identified information printed on a medium.

10. The information processing apparatus (1) according to any one of claims 1 to 9,
wherein the display control unit (154) is configured to keep displaying a screen presenting the identified information on the display (418) until the printer starts printing in response to an operation of the printer (2).

11. The information processing apparatus (1) according to any one of claims 1 to 10,
wherein the display control unit (154) is configured to hide the screen presenting the identified information on the display (418) in response to a reception of a notification of completion of printing of the identified information on a medium.

12. The information processing apparatus (1) according to any one of claims 1 to 11,
wherein the transmission unit (153) is configured to:

transmit a notification of cancellation of the print request of the identified information to the printer (2); and
control the printer (2) to delete the identified information in response to transmission the notification of cancellation.

13. An information processing system comprising:

the information processing apparatus (1) according to any one of claims 1 to 12; and
a printer configured to perform printing of the identified information transmitted by the transmission unit (153)
of the information processing apparatus (1).

14. A method for processing information, the method comprising:

acquiring (S3) voice;
identifying (S5,S6), in a storage area, information as a printing target by a printer, based on a recognition result
of the voice acquired;
transmitting (S7), to the printer (2), a print request of identified information; and
displaying (S7; S30), on a display (418), a screen presenting the identified information in response to transmission
of the print request.

15. Carrier means carrying computer readable codes for controlling a computer to carry out the method according to
claim 14.

# FIG. 1

# FIG. 2

# FIG. 3

| | | |
|---|---|---|
| 151<br>SPEECH RECOGNITION<br>PROCESSING UNIT | | 154<br>DISPLAY CONTROL<br>UNIT |
| 152<br>DATA IDENTIFICATION<br>UNIT | | 155<br>CANCELLATION<br>PROCESSING UNIT |
| 153<br>COMMUNICATION<br>CONTROL UNIT | | |

# FIG. 4

418

Handy Printer

| | |
|---|---|
| T | TEXT |
| | QR CODE |
| | IMAGE |
| | STAMP |
| | ADDRESS |

00:00

> 
> 
> 
>

# FIG. 5

404(803)

| | TITLE | INFORMATION |
|---|---|---|
| TEXT | A | ○-○, EBINA-SHI, KANAGAWA-KEN |
| | ⋮ | ⋮ |
| | Y | X-X, SHINAGAWA-KU, TOKYO |
| | TITLE | QR CODE DATA |
| QR CODE | B | ▩ ERROR CORRECTION CODE |
| | ⋮ | ⋮ |
| | F | ▩ ERROR CORRECTION CODE |
| | TITLE | IMAGE DATA |
| IMAGE | G | STORAGE LOCATION, IMAGE NAME |
| | ⋮ | ⋮ |
| | J | STORAGE LOCATION, IMAGE NAME |
| | TITLE | STAMP DATA |
| STAMP | M | STORAGE LOCATION, STAMP NAME |
| | ⋮ | ⋮ |
| | C | STORAGE LOCATION, STAMP NAME |
| | TITLE | ADDRESS DATA |
| ADDRESS | K | PRINT DIRECTION, POSTAL CODE, ADDRESS |
| | ⋮ | ⋮ |
| | P | PRINT DIRECTION, POSTAL CODE, ADDRESS |

# FIG. 6

## FIG. 7

HANDHELD PRINTER — 2

MOBILE COMMUNICATION TERMINAL — 1

POWER SUPPLY — 31

POWER SUPPLY CIRCUIT — 32

INKJET RECORDING HEAD — 33

INKJET RECORDING HEAD DRIVE CIRCUIT — 34

CONTROLLER — 35

COMMUNICATION I/F — 36

OPU — 37

NAVIGATION SENSOR — 38

GYRO SENSOR — 39

DRAM — 40

ROM — 41

PRINT CONTROL PROGRAM

TIMER — 42

HEAD CAP DETECTOR — 43

RECORDING MEDIUM — 3

# FIG. 8

FIG. 9

USER
(MOBILE COMMUNICA-
TION TERMINAL)

SoC,ASIC/FPGA

START (POWER ON)

PRESS POWER
BUTTON
S100

S201
INITIALIZE POSITION
SENSOR AND EACH DEVICE

S101
DESIGNATE PRINT
TARGET NFOR-
MATION BY SPEECH

S202
INITIALIZATION COMPLETE?    NO

YES    S203
LIGHT UP POWER BUTTON

S102
DETERMINE PRINT
TARGET
INFORMATION

S204
RECEIVE PRINT REQUEST: BUTTON BLINK

S219
GENERATE PRINT DATA

S103
TRANSMIT PRINT
REQUEST

S205
READ POSITION INFORMATION

S218
STORE
ACQUIRED
POSITION
INFORMATION

S206
STORE POSITION INFORMATION
AS INITIAL POSITION

S207
MEASURE TIME WITH TIMING
GENERATION CIRCUIT

NO    S208
SENSOR READ TIME?

YES

S209
READ ANGULAR VELOCITY INFORMATION AND
SENSOR POSITION INFORMATION

S210
CALCULATE AND STORE CURRENT POSITION

S211
CALCULATE CURRENT NOZZLE POSITION

S212
READ IMAGE DATA AROUND NOZZLE FROM MEMORY INTO IMAGE RAM

S213
COMPARE IMAGE DATA AND NOZZLE POSITION

NO    S214
IS DISCHARGE
CONDITION SATISFIED?

YES    S215
TRANSMIT PRINT DATA FOR DISCHARGE TO INKJET HEAD

NO    S216
DISCHARGE FOR PRINT
OF ALL DATA COMPLETE?

YES    S217
LIGHT UP BUTTON

END

# FIG. 10

FIG. 11

START

DISPLAY TEXT MODE SCREEN —S1

IS VOICE INPUT BUTTON OPERATED? S2
NO
YES —S3

DISPLAY VOICE INPUT SCREEN

PRINT DATA DESIGNATED BY NORMAL OPERATION S11

IS SPEECH DETECTED? S4
NO
YES

IS CANCEL INSTRUCTED? S12
NO
YES

IDENTIFY INFORMATION IN STORAGE AREA S5

IS THERE INFORMATION MATCHING INPUT USER SPEECH? S6
NO
YES

DISPLAY ERROR SCREEN S13

TRANSMIT IDENTIFIED INFORMATION AND DISPLAY TRANSMISSION DIALOG ON PREVIEW SCREEN S7

TRANSMISSION COMPLETE? S8
NO
YES —S9

CLOSE TRANSMISSION DIALOG

IS CANCEL INSTRUCTED? S10
YES
NO

TRANSMIT NOTIFICATION OF PRINT CANCEL S16

PRINT COMPLETION NOTIFICATION RECEIVED? S14
NO
YES —S15

CLOSE PREVIEW SCREEN

END

# FIG. 12

# FIG. 13

418

# FIG. 14

| Text | |
|---|---|
| New Text | > |
| Title1 | > |
| Title2 | > |
| Title3 | > |
| Title4 | > |

VOICE INPUT

DATA IS NOT FOUND.
TELL TITLE OF TEXT OR QR
CODE REGISTERED IN ADVANCE.

CANCEL

Edit          New Text

# FIG. 15

418

PRINT

TRANSMITTING

1/1 CANCEL — 801

# FIG. 16

418

PRINT

EBINA-SHI, KANAGAWA-KEN
⟶

1/1 | CANCEL — 801

# FIG. 17

418

PRINT

1/1  CANCEL  801

# FIG. 18

404(803)

| CC | CLASSIFI-CATION | TITLE | INFORMATION |
|---|---|---|---|
| 1 | TEXT | A | ABC-12345-DE |
| | | B | VWX-98765-YZ |
| | | ... | ... |
| | | Z | 123-ABCDE-45 |
| 2 | QR CODE | A | (ERROR CORRECTION CODE) |
| | | C | (ERROR CORRECTION CODE) |
| | | ... | ...... |
| | | Z | (ERROR CORRECTION CODE) |
| 3 | IMAGE | B | (STORAGE AREA, IMAGE NAME) |
| | | C | (STORAGE AREA, IMAGE NAME) |
| | | ... | ... |
| | | Z | (STORAGE AREA, IMAGE NAME) |

FIG. 19

START

DISPLAY TEXT MODE SCREEN —S1

IS VOICE INPUT BUTTON OPERATED? S2
NO

YES S3

PRINT DATA DESIGNATED BY NORMAL OPERATION S11

DISPLAY VOICE INPUT SCREEN

IS SPEECH DETECTED? S4
NO

YES

IS CANCEL INSTRUCTED? S12
NO

YES

IDENTIFY INFORMATION IN STORAGE AREA S20

IS THERE INFORMATION MATCHING INPUT USER SPEECH? S6
NO

YES

DISPLAY ERROR SCREEN S13

TRANSMIT IDENTIFIED INFORMATION AND DISPLAY TRANSMISSION DIALOG S7

TRANSMISSION COMPLETE? S8
NO

YES S30

CLOSE TRANSMISSION DIALOG AND DISPLAY PREVIEW

IS CANCEL INSTRUCTED? S10
YES

TRANSMIT NOTIFICATION OF PRINT CANCEL S16

NO

PRINT COMPLE-TION NOTIFICATION RECEIVED? S14
NO

YES S15

CLOSE PREVIEW SCREEN

END

# FIG. 20

START

S21

N=1

S22

IS THERE TITLE MATCHING INPUT SPEECH IN CLASSIFICATION N=1?

NO

YES

S23

IDENTIFY INFORMATION ASSOCIATED WITH TITLE

S24

NO

N=MAXIMUM?

S25

N=N+1

YES

END

# FIG. 21

START

S31
IS THERE A PLURALITY OF INFORMATION? —— NO

YES

S33
ONE-PASS PRINT? —— NO

YES S34
DISPLAY PREVIEW SCREEN

S37
DISPLAY PREVIEW SCREEN PER ONE PASS

S35
IS PRINT ORDER CHANGED?
YES

S38
IS PRINT ORDER CHANGED?
YES

NO

S36
RECEIVE PRINT ORDER

NO

S39
RECEIVE PRINT ORDER

S32
DISPLAY PREVIEW SCREEN

END

# FIG. 22

418

PRINT

THERE IS A PLURALITY OF
INFORMATION.
PRINT INFORMATION IN ONE-PASS?
PRINT INFORMATION IN TWO-PASS?

ONE-PASS PRINT

PRINT ⎯⎯ B1

TWO-PASS PRINT

PRINT ⎯⎯ B2

1/1    CANCEL ⎯⎯ 801

◁    ◯    ▢

# FIG. 23

418

# FIG. 24

418

PRINT

ABC-12345-DE

DO YOU WANT TO CHANGE PRINT ORDER?

B3 — | Yes |     | No | — B4

1/1     | CANCEL | — 801

EP 3 910 466 A1

418

PRINT

⟹ ABC-12345-DE

DO YOU WANT TO CHANGE PRINT
ORDER?

B3 — Yes      No — B4

1/1      CANCEL — 801

418

PRINT

⟹

DO YOU WANT TO CHANGE PRINT
ORDER?

B3 — Yes      No — B4

1/1      CANCEL — 801

FIG. 25

Europäisches
Patentamt

European
Patent Office

Office européen
des brevets

**EUROPEAN SEARCH REPORT**

Application Number

EP 21 17 0066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/354257 A1 (WATANABE JUN [JP] ET AL) 13 December 2018 (2018-12-13) <br> * paragraph [0039] - paragraph [0050] * <br> * paragraph [0076] - paragraph [0090] * <br> * paragraph [0119] - paragraph [0246] * <br> * figures 1, 2, 5, 6, 12C, 15, 16A, 16B, 17, 24 * | 1-15 | INV. <br> G06F3/12 <br> G06F3/16 |
| A | WO 2019/231055 A1 (HEWLETT PACKARD DEVELOPMENT CO [US]) 5 December 2019 (2019-12-05) <br> * paragraph [0018] - paragraph [0084] * <br> * figures 1, 4, 5 * | 1-15 | |
| A | US 2016/259607 A1 (IMINE RYOTARO [JP]) 8 September 2016 (2016-09-08) <br> * paragraph [0029] - paragraph [0128] * <br> * figures 1, 5, 7A-7C, 10A, 10B * | 1-15 | |
| | | | TECHNICAL FIELDS SEARCHED (IPC) <br><br> G06F <br> B41J |

The present search report has been drawn up for all claims

| Place of search | Date of completion of the search | Examiner |
|---|---|---|
| The Hague | 16 September 2021 | Kochev, Miroslav |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 0066

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2021

| Patent document cited in search report | | Publication date | Patent family member(s) | | Publication date |
|---|---|---|---|---|---|
| US 2018354257 | A1 | 13-12-2018 | EP | 3415328 A1 | 19-12-2018 |
| | | | JP | 2019003336 A | 10-01-2019 |
| | | | US | 2018354257 A1 | 13-12-2018 |
| WO 2019231055 | A1 | 05-12-2019 | EP | 3718104 A1 | 07-10-2020 |
| | | | KR | 20190136832 A | 10-12-2019 |
| | | | US | 2021240403 A1 | 05-08-2021 |
| | | | WO | 2019231055 A1 | 05-12-2019 |
| US 2016259607 | A1 | 08-09-2016 | JP | 6351248 B2 | 04-07-2018 |
| | | | JP | 2015115862 A | 22-06-2015 |
| | | | US | 2016259607 A1 | 08-09-2016 |
| | | | WO | 2015088041 A1 | 18-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005309065 A